# EUROPEAN PATENT SPECIFICATION

(11) **EP 3 219 056 B1**
(45) Date of publication and mention of the grant of the patent: **13.11.2019**
(21) Application number: 15700391.4
(22) Date of filing: 15.01.2015
(51) Int. Cl.: H04L 12/58, H04L 12/18, H04W 76/00

(54) **METHOD AND SERVICE CENTER FOR COMMUNICATING BROADCAST MESSAGES BETWEEN CLIENTS IN A COMMUNICATION NETWORK**
VERFAHREN UND DIENSTZENTRUM ZUR ÜBERMITTLUNG VON RUNDFUNKNACHRICHTEN ZWISCHEN CLIENTS IN EINEM KOMMUNIKATIONSNETZ
PROCÉDÉ ET CENTRE DE SERVICE POUR COMMUNIQUER DES MESSAGES DE DIFFUSION ENTRE DES CLIENTS DANS UN RÉSEAU DE COMMUNICATION

(43) Date of publication of application: 20.09.2017
(73) Proprietor: Siemens Aktiengesellschaft, 80333 München (DE)
(72) Inventor: WALEWSKI, Joachim, 82008 Unterhaching (DE)
(86) International application number: PCT/EP2015/050676
(87) International publication number: WO 2016/112982

(56) References cited:
- EP-A1- 1 320 215
- EP-A1- 2 141 823

## Description

### FIELD OF THE INVENTION

The present invention relates to a method for communicating broadcast messages between clients in a communication network. Further, the present invention relates to a service center for communicating broadcast messages between clients in a communication network.

### BACKGROUND

Distributed automation, e.g. energy-automation in medium-voltage grids, relies on effective communication of automation data packages. Many conventional automation protocols rely on layer-2 broadcast mechanisms for at least part of their messages. Mobile-network technology such as LTE (Long-Term Evolution) is currently investigated for its potential as wide-area networks (WANs) for distributed automation.

Mechanisms for translating layer-2 broadcast messages into layer-3 multicast packages exist, so that IP-centric technologies such as LTE are in principle suitable. However, in many circumstances, not all automation devices need to hear and therefore receive all broadcast messages. One example for this is the avoidance of power tripping in medium-voltage distribution networks. In such a medium-voltage distribution network, it is only necessary for the energy-automation devices to hear those in neighboring secondary substations, e.g. not all of the secondary substations in one medium-voltage branch or open ring.

It is an objective of the present invention to improve communicating broadcast messages in a communication network.

Prior art examples for broadcast in point-to-point networks are disclosed in patent documents EP 1 320 215 A1 and EP 2 141 823 A1.

### BRIEF SUMMARY OF THE INVENTION

According to a first aspect, a method for communicating broadcast messages between clients in a communication network having a core mobile network and a number N of wireless mobile networks (N ≥ 1) is suggested. Each of the clients is coupled to the core mobile network at least by one of the N wireless mobile networks. The method comprises sending a broadcast message from a sending client of the clients via unicast to a service center of the core mobile network and transmitting the broadcast message from the service center via broadcast to the plurality of clients using at least a subset of the N wireless mobile networks, so that the broadcast message does not reach the sending client.

For example, each of the clients includes an automation unit or secondary substation and a modem. The clients may be coupled by a medium-voltage distribution network, for example by an open medium-voltage ring. The communication network may be a 3G network, a 4G network or a 5G network. The service center may include a broadcast multicast service center (BMSC) and a multimedia broadcast multicast service gateway (MBMS-GW).

Advantageously, the present method enables clients to directly communicate broadcast messages with each other.

As mentioned above, each of the clients includes an automation unit or secondary substation and a modem, e.g. an LTE modem. Thus, according to some implementations, the present method may enable differentiated WAN (Wide-Area Network) automation broadcast through the use of LTE multimedia broadcast multicast services.

For example, already existing standard solutions, like 3GPP R9 and later, may be used for separating broadcast traffic from the automation units that should not see each other.

The wireless mobile networks may be radio-access networks. The combination of an LTE modem with other functionalities (here: automation) may be a user equipment (UE).

According to some implementations, the present method may use GOOSE, because it is particularly well suited for energy-automation broadcast via routable GOOSE. A reason for that is that not all energy-automation units need to hear each other.

Further, according to some implementations, the broadcast areas of different applications may be separated from each other.

In an embodiment, the broadcast message is sent from the sending client over a local gateway or a packet data network gateway (PDN gateway) to the broadcast multicast service center (BMSC).

According to a further embodiment, the broadcast message is transmitted from the broadcast multicast service center to the clients (or receiving clients) over the multimedia broadcast multicast service gateway and for example over the local gateway or the packet data network gateway.

According to a further embodiment, the method comprises a step of allocating each of the clients to one broadcast area of a plurality of broadcast areas covered by the N wireless mobile networks.

This suggested area mechanism allows creating overlapping zones of almost arbitrary topology and of high scalability since a base station, according to current standards, may belong to up to eight broadcast areas per sector. For example, using the 3GPP area-broadcast mechanisms results in low traffic as opposed to an "all-out" broadcast or "unicast-broadcast" solutions such as layer-tunneling (see, e.g. IEC 61850-90-5).

Moreover, if more than one sector is used for connecting automation units, up to 256 broadcast areas can be supported. An intelligent combination of sectors and, where needed, multiple base stations may thus support a very fine-grain separation of broadcast traffic in an automation network.

According to a further embodiment, the method comprises a step of transmitting the broadcast messages received from the sending client being allocated to a certain broadcast area of the plurality of broadcast areas from the service center via broadcast to the further clients allocated to said certain broadcast area.

That means that from one certain sending client that is allocated to a certain broadcast area, the broadcast message is transmitted from said sending client to the service center via unicast, and then the same broadcast message is transmitted to the further clients allocated to the same certain broadcast area using broadcast.

According to a further embodiment, the method comprises a step of filtering the broadcast message which is broadcast to the clients allocated to said certain broadcast area such that it reaches all the clients allocated to said certain broadcast area excluding the sending client.

On the other hand, according to some implementations, such a filtering is not used. Then, the sending client can receive the broadcast message which it originated by itself. The sending client may interpret this received broadcast message as a transmission confirmation.

Said allocating may be based on mapping indications, identifiers, geographic locations of the clients or a combination thereof. In the following, these possibilities are proposed in detail.

According to a further implementation, the allocating includes sending a mapping indication from a certain client of the clients to the service center, wherein the mapping indication indicates a certain broadcast area the certain client wants to join, receiving the mapping indication at the service center, and mapping the certain client to the certain broadcast area using said received mapping indication.

As mentioned above, each of the clients may include an automation unit (or secondary substation) and a modem (e.g. an LTE modem). The mapping indication may be provided in dependence on the automation unit, for example in dependence on a certain type of the automation unit. The provided mapping indication may be transferred to the service center using the modem.

According to a further embodiment, the allocating includes sending an identifier (ID) of a certain client of the clients to the service center, receiving the identifier at the service center, and mapping the certain client to a certain broadcast area using the received identifier.

In this embodiment, the certain client may be mapped to the certain broadcast area using the received identifier identifying the automation unit and/or the modem and using a directory. The directory may list the automation units, the modems and the allocated broadcast areas.

According to a further embodiment, allocating includes providing a geographic location of a certain client of the clients to the service center, receiving the geographic location at the service center, and mapping the certain client to the certain broadcast area using the received geographic location.

According to a further embodiment, the method includes a step of shaping the traffic for the plurality of broadcast areas. In particular, for each of the broadcast areas, the number of subframes may be adjusted within a radio frame dedicated to a respective broadcast area. In particular, the number of subframes within the radio frame dedicated to one broadcast area is variable. This may be used for said traffic shaping. If, for instance, one broadcast area contains mission-critical automation devices which, in the case of an emergency, produce a lot of traffic (for example: a GOOSE burst), then this mechanism may be used for an a-priori allocating sufficient bandwidth to this broadcast area. Particularly, this may be done on a dynamic basis.

Any embodiments of the first aspect may be combined with any embodiment of the first aspect to obtain another embodiment of the first aspect.

According to a second aspect, a service center for communicating broadcast messages between clients in a communication network having a core mobile network and a number N of wireless mobile networks (N ≥ 1) is suggested. Each of the clients is coupled to the core mobile network by one of the N wireless mobile networks. The service center includes a receiving unit and a transmitting unit. The receiving unit is configured to receive a broadcast message sent from a sending client of the clients via unicast. The transmitting unit is configured to transmit the broadcast message received from said receiving unit via broadcast to a plurality of the clients using at least a subset of the N wireless mobile networks.

The respective unit, e.g. the receiving unit, the transmitting unit or the automation unit, may be implemented in hardware and/or in software. If said unit is implemented in hardware, it may be embodied as a device, e.g. as a computer or as a processor or as a part of a system, e.g. a computer system. If said unit is implemented in software, it may be embodied as a computer program product, as a function, as a routine, as a program code or as an executable object. In particular, the automation unit may be an automation application. The automation unit may be entirely virtual, e.g., software that runs on the same CPU as, e.g. a layer-2-to-3 translator.

According to a third aspect, the invention relates to a system comprising a plurality of clients and a service center of above-mentioned second aspect.

The embodiments and features described with reference to the device of the present invention apply mutatis mutandis to the method of the present invention.

Further possible implementations or alternative solutions of the invention also encompass combinations - that are not explicitly mentioned herein - of features described above or below with regard to the embodiments. A person skilled in the art may also add individual or isolated aspects and features to the most basic form of the invention.

Moreover, the following example may illustrate the functionality of the present invention. For the following example, the service center includes a broadcast multicast service center (BMSC) and a multimedia broadcast multicast service gateway (MBMS-GW). Further, the core mobile network is an LTE network. The example includes the following steps 1 - 8.
1. The LTE network that provides collectivity for the automation units is equipped with the BMSC and the MBMS-GW.
2. The LTE modems that are connected to the broadcast automation units subscribe to broadcast messages from the BMSC.
3. The LTE modem is mapped or allocated to one broadcast area. For this allocation, the following solutions a) - c) are conceivable.
   a) The LTE modem itself indicates what broadcast area it wants to join. The necessary information for doing so may, for instance, be provided by the automation unit the LTE modem serves.
   b) The LTE modem only provides an identifier (ID) for itself or the connected automation unit or units. The MBMS-GW decides on this ID what broadcast area or broadcast areas the LTE modem and its associated automation unit(s) belong to. This decision can, for instance, be supported by a directory in which the LTE modems and/or the automation units are listed and which also lists the pertinent broadcast areas.
   c) The LTE modem provides its geographic location or alternatively that of the connected automation unit(s). The geographic location can, for instance, contain street addresses or GPS coordinates.
4. The BMSC is enabled in such a way that it can receive broadcast messages from the automation units.
5. The base stations of the LTE network serving said LTE modems are also connected to a local gateway or a PDN gateway.
6. In case the automation messages were originally defined for layer-2 communications: The automation units or a gateway between the automation units and their pertinent LTE modems are equipped with a "layer-2-to-layer-3 translator" that may also serve as a router.
7. Broadcast-automation messages are sent via unicast to the BMSC. This can, for instance, be accomplished via a regular bearer, that terminates at the PDN gateway, and the PDN gateway forwards the unicast packet(s) to the BMSC.
8. Depending on where the sending automation unit of the broadcast messages is situated, the broadcast message is broadcast by the BMSC via the MBMS-GW into the pertinent broadcast area.

Further embodiments, features, and advantages of the present invention will become apparent from the subsequent description and dependent claims, taken in conjunction with the accompanying drawings.

### BRIEF DESCRIPTION OF THE DRAWINGS

Fig. 1 shows a first embodiment of a sequence of method steps for communicating broadcast messages between clients in a communication network;
Fig. 2 shows a second embodiment of a sequence of method steps for communicating broadcast messages between clients in a communication network;
Fig. 3 shows a schematic block diagram of a first embodiment of a system for communicating broadcast messages between clients in a communication network;
Fig. 4 shows a schematic block diagram of a second embodiment of a system for communicating broadcast messages between clients in a communication network; and
Fig. 5 shows a schematic block diagram of an embodiment of a service center for communicating broadcast messages between clients in a communication network.

In the Figures, like reference numerals designate like or functionally equivalent elements, unless otherwise indicated.

### DETAILED DESCRIPTION OF THE EMBODIMENTS

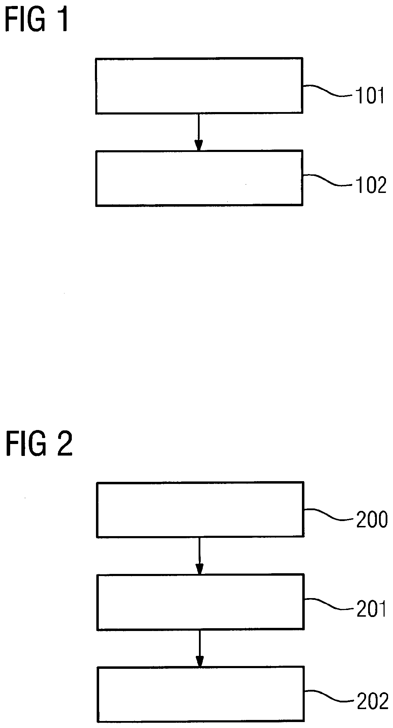

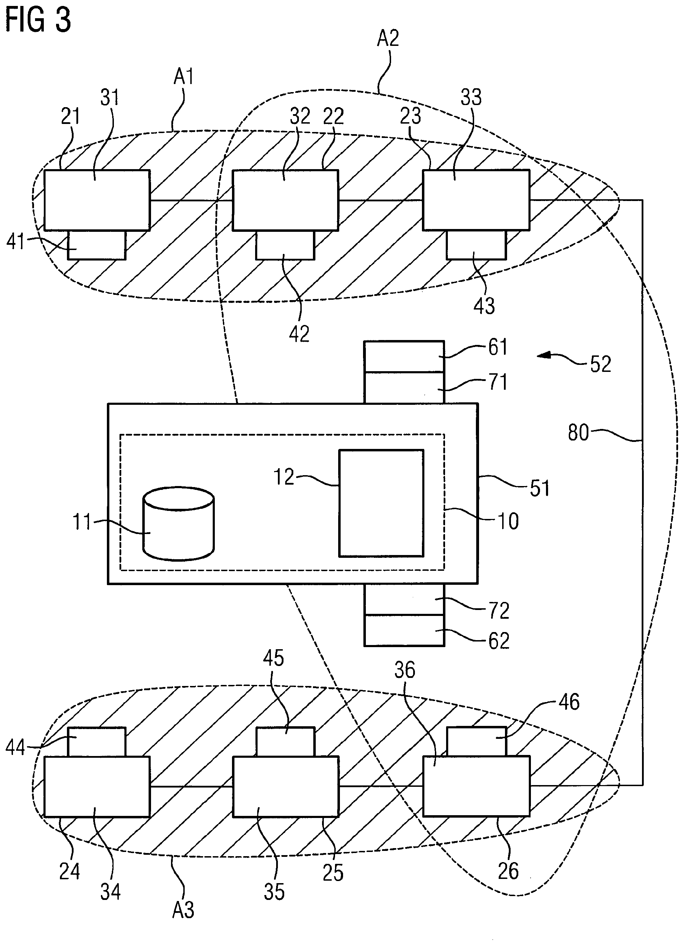

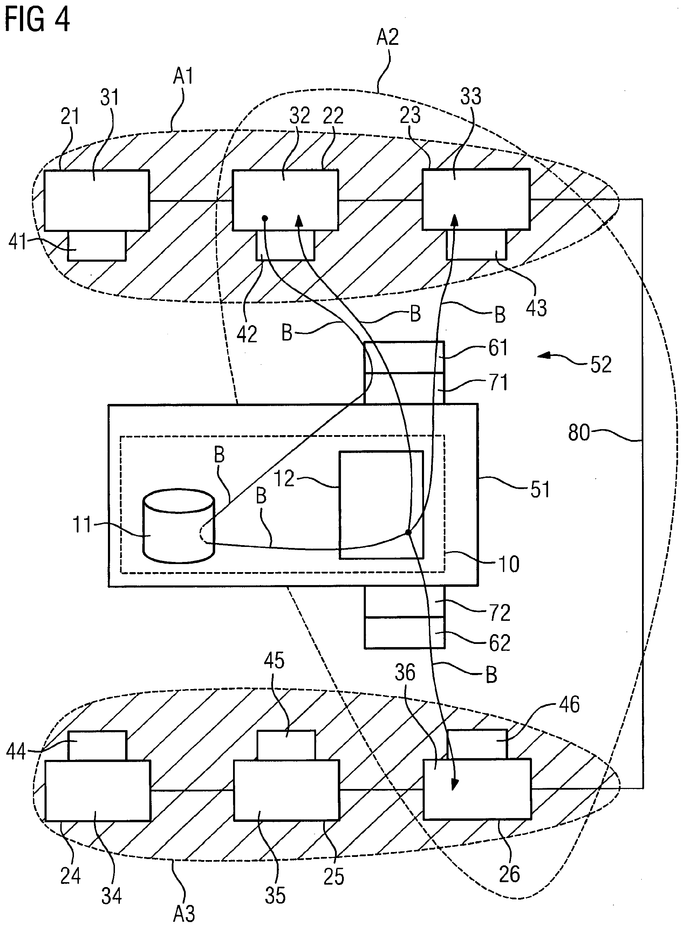

Figs. 1 and 2 show embodiments for a method for communicating broadcast messages B between clients 21 - 26 in a communication network 51, 52. Figs. 3 and 4 show a system for communicating said broadcast messages B in which the methods of Figs. 1 and 2 may be applied, respectively. In this regard, the embodiments of the methods according to Figs. 1 and 2 are explained with reference to Figs. 3 and 4. Figs. 3 and 4 are equivalent to each other, wherein Fig. 4 additionally shows the flow of a broadcast message B from a sending client 22 to receiving clients 22, 23, 26.

The architecture of the system of Figs. 3 and 4 is as follows: The system of Figs. 3 and 4 includes a communication network 51, 52 having a core mobile network 51 and an wireless mobile network 52 (N ≥ 1). Without loss of generality, Figs. 3 and 4 show one single wireless mobile network 52 (N = 1) which may be embodied as an LTE network. The core mobile network 51 includes a service center 10 having a BMSC 11 and a MBMS-GW 12. Further, said core mobile network 51 has a number of base stations 61, 62 and local gateways 71, 72. For example, the respective base station 61, 62 may be an eNodeB.

Further, in the system of Figs. 3 and 4 there are six clients 21 - 26, wherein each client 21 - 26 includes an automation unit 31 - 36 and a modem 41 - 46. The clients 21 - 26 are coupled by a medium-voltage distribution network 80. Each of the clients 21 - 26 is allocated or mapped to one broadcast area A1 - A3 covered by the wireless mobile network 52. In the example of Figs. 3 and 4, the three clients 21 - 23 are allocated to a first broadcast area A1. Further, the three clients 22, 23, 26 are allocated to a second broadcast area A2. Moreover, the three clients 24, 25, 26 are allocated to a third broadcast area A3.

Fig. 1 shows a first embodiment of a sequence of method steps for communicating broadcast messages B between clients 21 - 26 in a communication network 51, 52 having a core mobile network 51 and a number N (N ≥ 1) of wireless mobile networks 52. Each of the clients 21 - 26 is coupled to the core mobile network 51 by at least one of the N wireless mobile networks 52.

The method of Fig. 1 includes the following steps 101 and 102:
In step 101, a broadcast message B is sent from a sending client 22 of the clients 21 - 26 via unicast to a service center 10 of the core mobile network 51.
In step 102, the broadcast message B is transmitted from the service center 10 via broadcast to a plurality of the clients 22, 23, 26 using at least a subset of the N wireless mobile networks 52.

Fig. 2 shows a second embodiment of a sequence of method steps for communicating broadcast messages B between clients 21 - 26 in a communication network 51, 52.

The method of Fig. 2 includes the following steps 200, 201 and 202:
In step 200, each of the clients 21 - 26 is allocated to at minimum one broadcast area A1 - A3 of a plurality of broadcast areas A1 - A3 covered by the wireless mobile network 52. Said step of allocating may use mapping indications of the clients 21 - 26, identifiers of the clients 21 - 26 or geographic locations of the clients 21 - 26. Further, said allocation may be done as exemplary shown in Figs. 3 and 4.
In step 201, a broadcast message B is sent from a sending client, the client 22 in Fig. 4, via unicast to the service center 10 of the core mobile network 51.
In step 202, the broadcast message B received from the sending client 22 being allocated to the second broadcast area A2 is transmitted from the service center 10 via broadcast to the further clients 22, 23, 26 allocated to said second broadcast area A2.

In particular, the traffic for the broadcast areas A1 - A3 may be shaped. For example, for each of the broadcast areas A1 - A3, the number of subframes may be adjusted within a radio frame dedicated to the respective broadcast area A1 - A3.

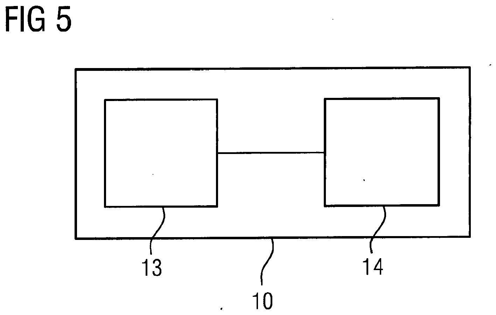

Fig. 5 shows a schematic block diagram of an embodiment of the service center 10 for communicating broadcast messages B between clients 21 - 26 in a communication network 51, 52 having a core mobile network 51 and a number N of wireless mobile networks 52. Each of the clients 21 - 26 is coupled to the core mobile network 51 by one of the N wireless mobile networks 52.

The service center 10 of Fig. 5 comprises a receiving unit 13 and a transmitting unit 14.

The receiving unit 13 is configured to receive a broadcast message B sent from a sending client 22 (see Fig. 4) of the clients 21 - 26 via unicast.

The transmitting unit 14 is configured to transmit the broadcast message B via broadcast to a plurality of the clients 22, 23, 26 (see Fig. 4) using at least a subset of the N wireless mobile networks 52. For example, the receiving unit 14 may be part of the BMSC 11 of Figs. 3 and 4, wherein the transmitting unit 14 may be part of the MBMS-GW 12 of Figs. 3 and 4.

The invention is defined by the appended claims.

## Claims

1. A method for communicating broadcast messages (B) between clients (21 - 26) in a communication network (51, 52) having a core mobile network (51) and a number N of wireless mobile networks (52), wherein each of the clients (21 - 26) is coupled to the core mobile network (51) by one of the N wireless mobile networks (52), the method comprising:
allocating (200) each of the clients (21 - 26) to one broadcast area (A1, A2, A3) of a plurality of broadcast areas (A1, A2, A3) covered by the N wireless mobile networks (52),
sending (101, 201) a broadcast message (B) from a sending client (22) of the clients (21 - 26) via unicast to a service center (10) of the core mobile network (51), and
transmitting (102, 202) the broadcast message (B), which is allocated to a certain broadcast area (A2), from the service center (10) via broadcast to a plurality of the clients (22, 23, 26) allocated to said certain broadcast area (A2),
filtering the broadcast message (B) broadcast to the clients (22, 23, 26) allocated to said certain broadcast area (A2) such that it reaches all the clients (23, 26) allocated to said certain broadcast area (A2) excluding the sending client (22).

2. The method of claim 1,
wherein the service center (10) includes a broadcast multicast service center (11) and/or a multimedia broadcast multicast service gateway (12).

3. The method of claim 2,
wherein the broadcast message (B) is sent from the sending client (22) over a local gateway (71, 72) or a packet data network gateway to the broadcast multicast service center (11).

4. The method of claim 2 or 3,
wherein the broadcast message (B) is transmitted from the broadcast multicast service center (11) to the clients (22, 23, 26) over the multimedia broadcast multicast service gateway (12).

5. The method of one of claims 1 to 4, wherein the allocating (200) includes:
sending a mapping indication from a certain client (22) of the clients (21 - 26) to the service center (10), wherein the mapping indication indicates a certain broadcast area (A2) the certain client (22) wants to join,
receiving the mapping indication at the service center (10), and
mapping the certain client (22) to the certain broadcast area (A2) using said received mapping indication.

6. The method of claim 5,
wherein each of the clients (21 - 26) includes an automation unit (31 - 36) and a modem (41 - 46), wherein the mapping indication is provided in dependence on the automation unit (31 - 36), wherein the provided mapping indication is transferred to the service center (10) using the modem (41 - 46).

7. The method of one of claims 1 to 4, wherein the allocating (200) includes:
sending an identifier of a certain client (22) of the clients (21 - 26) to the service center (10),
receiving the identifier at the service center (10), and
mapping the certain client (22) to a certain broadcast area (A2) using the received identifier.

8. The method of claim 7,
wherein each of the clients (21 - 26) includes an automation unit (31 - 36) and a modem (41 - 46), wherein the certain client (22) is mapped to the certain broadcast area (A2) using the received identifier identifying the automation unit (32) and/or the modem (42) and using a directory, wherein the directory lists the automation units (31 - 36), the modems (41 - 46) and their allocated broadcast areas (A1 - A3).

9. The method of one of claims 1 to 4, wherein the allocating includes:
providing a geographic location of a certain client (22) of the clients (21 - 26) to the service center (10),
receiving the geographic location at the service center (10), and
mapping the certain client (22) to the certain broadcast (A2) area using the received geographic location.

10. The method of one of claims 1 to 9, further comprising:
shaping the traffic for the plurality of broadcast areas (A1 - A3).

11. The method of claim 10, further comprising:
for each of the broadcast areas (A1 - A3), adjusting the number of subframes within a radio frame dedicated to the respective broadcast area (A1 - A3).

12. A service center (10) for communicating broadcast messages (B) between clients (21 - 26) in a communication network (51, 52) having a core mobile network (51) and a number N of wireless mobile networks (52), wherein each of the clients (21 - 26) is coupled to the core mobile network (51) by one of the N wireless mobile networks (52), wherein each of the clients (21 - 26) is allocated to one broadcast area (A1, A2, A3) of a plurality of broadcast areas (A1, A2, A3) covered by the N wireless mobile networks (52), the service center (10) comprising:
a receiving unit (13) for receiving a broadcast message (B) sent from a sending client (22) of the clients (21 - 26) via unicast, and
a transmitting (14) unit for transmitting the broadcast message (B) which is allocated to a certain broadcast area (A2) from the service center (10) via broadcast to the clients (22, 23, 26) allocated to said certain broadcast area (A2); and for filtering such that it reaches all the clients (23, 26) allocated to said certain broadcast area (A2) excluding the sending client (22).

13. A system, comprising:
a plurality of clients (21 - 26), and
a service center (10) such as claimed in claim 12.

## Patentansprüche

1. Verfahren zur Übermittlung von Rundsendenachrichten (B) zwischen Clients (21 - 26) in einem Kommunikationsnetz (51, 52), das ein Kernmobilfunknetz (51) und eine Anzahl N von drahtlosen Mobilfunknetzen (52) aufweist, wobei jeder der Clients (21 - 26) mit dem Kernmobilfunknetz (51) durch eines der N drahtlosen Mobilfunknetze (52) gekoppelt ist, wobei das Verfahren umfasst:
Zuweisen (200) jedes der Clients (21 - 26) zu einem Rundsendegebiet (A1, A2, A3) von mehreren Rundsendegebieten (A1, A2, A3), die von den N drahtlosen Mobilfunknetzen (52) abgedeckt werden,
Senden (101, 201) einer Rundsendenachricht (B) von einem sendenden Client (22) der Clients (21 - 26) durch Unicast-Übertragung an ein Dienstzentrum (10) des Kernmobilfunknetzes (51), und
Übertragen (102, 202) der Rundsendenachricht (B), welche einem gewissen Rundsendegebiet (A2) zugewiesen ist, von dem Dienstzentrum (10) durch Rundsenden an mehrere der Clients (22, 23, 26), die dem gewissen Rundsendegebiet (A2) zugewiesen sind,
Filtern der Rundsendenachricht (B), die an die Clients (22, 23, 26) rundgesendet wird, die dem gewissen Rundsendegebiet (A2) zugewiesen sind, so dass sie alle Clients (23, 26), die dem gewissen Rundsendegebiet (A2) zugewiesen sind, mit Ausnahme des sendenden Clients (22) erreicht.

2. Verfahren nach Anspruch 1,
wobei das Dienstzentrum (10) ein Broadcast Multicast Service Center (11) und/oder ein Multimedia Broadcast Multicast Service Gateway (12) umfasst.

3. Verfahren nach Anspruch 2,
wobei die Rundsendenachricht (B) von dem sendenden Client (22) über ein lokales Gateway (71, 72) oder ein Paketdatennetz-Gateway an das Broadcast Multicast Service Center (11) gesendet wird.

4. Verfahren nach Anspruch 2 oder 3,
wobei die Rundsendenachricht (B) von dem Broadcast Multicast Service Center (11) an die Clients (22, 23, 26) über das Multimedia Broadcast Multicast Service Gateway (12) übertragen wird.

5. Verfahren nach einem der Ansprüche 1 bis 4, wobei das Zuweisen (200) umfasst:
Senden einer Zuordnungsanzeige von einem gewissen Client (22) der Clients (21 - 26) zu dem Dienstzentrum (10), wobei die Zuordnungsanzeige ein gewisses Rundsendegebiet (A2) anzeigt, dem der gewisse Client (22) beitreten möchte,
Empfangen der Zuordnungsanzeige am Dienstzentrum (10), und
Zuordnen des gewissen Clients (22) zu dem gewissen Rundsendegebiet (A2) unter Verwendung der empfangenen Zuordnungsanzeige.

6. Verfahren nach Anspruch 5,
wobei jeder der Clients (21 - 26) eine Automatisierungseinheit (31 - 36) und ein Modem (41 - 46) aufweist, wobei die Zuordnungsanzeige in Abhängigkeit von der Automatisierungseinheit (31 - 36) bereitgestellt wird, wobei die bereitgestellte Zuordnungsanzeige an das Dienstzentrum (10) unter Verwendung des Modems (41 - 46) übertragen wird.

7. Verfahren nach einem der Ansprüche 1 bis 4, wobei das Zuweisen (200) umfasst:
Senden einer Kennung eines gewissen Clients (22) der Clients (21 - 26) an das Dienstzentrum (10),
Empfangen der Kennung am Dienstzentrum (10), und
Zuordnen des gewissen Clients (22) zu einem gewissen Rundsendegebiet (A2) unter Verwendung der empfangenen Kennung.

8. Verfahren nach Anspruch 7,
wobei jeder der Clients (21 - 26) eine Automatisierungseinheit (31 - 36) und ein Modem (41 - 46) aufweist, wobei der gewisse Client (22) dem gewissen Rundsendegebiet (A2) unter Verwendung der empfangenen Kennung, welche die Automatisierungseinheit (32) und/oder das Modem (42) identifiziert, und unter Verwendung eines Verzeichnisses zugeordnet wird, wobei in dem Verzeichnis die Automatisierungseinheiten (31 - 36), die Modems (41 - 46) und ihre zugewiesenen Rundsendegebiete (A1 - A3) aufgelistet sind.

9. Verfahren nach einem der Ansprüche 1 bis 4, wobei das Zuweisen umfasst:
Übermitteln eines geographischen Ortes eines gewissen Clients (22) der Clients (21 - 26) an das Dienstzentrum (10),
Empfangen des geographischen Ortes am Dienstzentrum (10), und
Zuordnen des gewissen Clients (22) zu dem gewissen Rundsendegebiet (A2) unter Verwendung des empfangenen geographischen Ortes.

10. Verfahren nach einem der Ansprüche 1 bis 9, welches ferner umfasst:
Verkehrsformung für die mehreren Rundsendegebiete (A1 - A3).

11. Verfahren nach Anspruch 10, welches ferner umfasst:
für jedes der Rundsendegebiete (A1 - A3), Anpassen der Anzahl der Unterrahmen innerhalb eines Funkrahmens, der für das jeweilige Rundsendegebiet (A1 - A3) bestimmt ist.

12. Dienstzentrum (10) zur Übermittlung von Rundsendenachrichten (B) zwischen Clients (21 - 26) in einem Kommunikationsnetz (51, 52), das ein Kernmobilfunknetz (51) und eine Anzahl N von drahtlosen Mobilfunknetzen (52) aufweist, wobei jeder der Clients (21 - 26) mit dem Kernmobilfunknetz (51) durch eines der N drahtlosen Mobilfunknetze (52) gekoppelt ist, wobei jeder der Clients (21 - 26) einem Rundsendegebiet (A1, A2, A3) von mehreren Rundsendegebieten (A1, A2, A3), die von den N drahtlosen Mobilfunknetzen (52) abgedeckt werden, zugewiesen ist, wobei das Dienstzentrum (10) umfasst:
eine Empfangseinheit (13) zum Empfangen einer Rundsendenachricht (B), die von einem sendenden Client (22) der Clients (21 - 26) durch Unicast-Übertragung gesendet wurde, und
eine Übertragungseinheit (14) zum Übertragen der Rundsendenachricht (B), welche einem gewissen Rundsendegebiet (A2) zugewiesen ist, von dem Dienstzentrum (10) durch Rundsenden an die Clients (22, 23, 26), die dem gewissen Rundsendegebiet (A2) zugewiesen sind; und zum Filtern, derart, dass sie alle Clients (23, 26), die dem gewissen Rundsendegebiet (A2) zugewiesen sind, mit Ausnahme des sendenden Clients (22) erreicht.

13. System, welches umfasst:
mehrere Clients (21 - 26) und
ein Dienstzentrum (10) nach Anspruch 12.

## Revendications

1. Un procédé de communication de messages de radiodiffusion (B) entre des clients (21 - 26) dans un réseau de communication (51, 52) possédant un réseau mobile noyau (51) et un nombre N de réseaux mobiles sans fil (52), chacun des clients (21 - 26) étant couplé au réseau mobile noyau (51) par un des N réseaux mobiles sans fil (52), le procédé comprenant :
l'attribution (200) de chacun des clients (21 - 26) à une zone de radiodiffusion (A1, A2, A3) d'une pluralité de zones de radiodiffusion (A1, A2, A3) couvertes par les N réseaux mobiles sans fil (52),
l'envoi (101, 201) d'un message de radiodiffusion (B) à partir d'un client d'expédition (22) des clients (21 - 26) par monodiffusion à un centre de service (10) du réseau mobile noyau (51), et
la transmission (102, 202) du message de radiodiffusion (B) qui est attribué à une zone de radiodiffusion donnée (A2), à partir du centre de service (10), par radiodiffusion à une pluralité des clients (22, 23, 26) attribués à ladite zone de radiodiffusion donnée (A2),
le filtrage du message de radiodiffusion (B) radiodiffusé aux clients (22, 23, 26) attribués à ladite zone de radiodiffusion donnée (A2) de sorte qu'il atteigne la totalité des clients (23, 26) attribués à ladite zone de radiodiffusion donnée (A2) à l'exclusion du client d'expédition (22).

2. Le procédé selon la revendication 1,
dans lequel le centre de service (10) comprend un centre de service de radiodiffusion multidiffusion (11) et/ou une passerelle de service de radiodiffusion multidiffusion multimédia (12).

3. Le procédé selon la revendication 2,
dans lequel le message de radiodiffusion (B) est envoyé à partir du client d'expédition (22) par l'intermédiaire d'une passerelle locale (71, 72) ou d'une passerelle de réseau de données en mode paquets au centre de service de radiodiffusion multidiffusion (11).

4. Le procédé selon la revendication 2 ou 3,
dans lequel le message de radiodiffusion (B) est transmis du centre de service de radiodiffusion multidiffusion (11) aux clients (22, 23, 26) par l'intermédiaire de la passerelle de service de radiodiffusion multidiffusion multimédia (12).

5. Le procédé selon l'une quelconque des revendications 1 à 4, dans lequel l'attribution (200) comprend :
l'envoi d'une indication de mise en correspondance à partir d'un client donné (22) des clients (21 - 26) au centre de service (10), l'indication de mise en correspondance indiquant une zone de radiodiffusion donnée (A2) à laquelle le client donné (22) souhaite se joindre,
la réception de l'indication de mise en correspondance au niveau du centre de service (10), et
la mise en correspondance du client donné (22) avec la zone de radiodiffusion donnée (A2) au moyen de ladite indication de mise en correspondance reçue.

6. Le procédé selon la revendication 5,
dans lequel chacun des clients (21 - 26) comprend une unité d'automatisation (31 - 36) et un modem (41 - 46), l'indication de mise en correspondance étant fournie en fonction de l'unité d'automatisation (31 25 - 36), l'indication de mise en correspondance fournie étant transférée au centre de service (10) au moyen du modem (41 - 46).

7. Le procédé selon l'une quelconque des revendications 1 à 4, dans lequel l'attribution (200) comprend :
l'envoi d'un identifiant d'un client donné (22) des clients (21 - 26) au centre de service (10),
la réception de l'identifiant au niveau du centre de service (10), et
la mise en correspondance du client donné (22) avec une zone de radiodiffusion donnée (A2) au moyen de l'identifiant reçu.

8. Le procédé selon la revendication 7,
dans lequel chacun des clients (21 - 26) comprend une unité d'automatisation (31 - 36) et un modem (41 - 46), le client donné (22) étant mis en correspondance avec la zone de radiodiffusion donnée (A2) au moyen de l'identifiant reçu identifiant l'unité d'automatisation (32) et/ou le modem (42) et l'utilisation d'un annuaire, l'annuaire contenant la liste des unités d'automatisation (31 - 36), des modems (41 - 46) et de leurs zones de radiodiffusion attribuées (A1 - A3).

9. Le procédé selon l'une quelconque des revendications 1 à 4, dans lequel l'attribution comprend :
la fourniture d'un emplacement géographique d'un client donné (22) des clients (21 - 26) au centre de service (10),
la réception de l'emplacement géographique au niveau du centre de service (10), et
la mise en correspondance du client donné (22) avec la zone de radiodiffusion donnée (A2) au moyen de l'emplacement géographique reçu.

10. Le procédé selon l'une quelconque des revendications 1 à 9, comprenant en outre :
la mise en forme du trafic destiné à la pluralité de zones de radiodiffusion (A1 - A3).

11. Le procédé selon la revendication 10, comprenant en outre :
pour chacune des zones de radiodiffusion (A1 - A3), l'ajustement du nombre de sous-trames à l'intérieur d'une trame radio dédiée à la zone de radiodiffusion respective (A1 - A3).

12. Un centre de service (10) destiné à la communication de messages de radiodiffusion (B) entre des clients (21 - 26) dans un réseau de communication (51, 52) possédant un réseau mobile noyau (51) et un nombre N de réseaux mobiles sans fil (52), chacun des clients (21 - 26) étant couplé au réseau mobile noyau (51) par un des N réseaux mobiles sans fil (52), chacun des clients (21 - 26) étant attribué à une zone de radiodiffusion (A1, A2, A3) d'une pluralité de zones de radiodiffusion (A1, A2, A3) couvertes par les N réseaux mobiles sans fil (52), le centre de service (10) comprenant :
une unité de réception (13) destinée à la réception d'un message de radiodiffusion (B) envoyé à partir d'un client d'expédition (22) des clients (21 - 26) par monodiffusion, et
une unité de transmission (14) destinée à la transmission du message de radiodiffusion (B) qui est attribué à une zone de radiodiffusion donnée (A2) à partir du centre de service (10) par radiodiffusion aux clients (22, 23, 26) attribués à ladite zone de radiodiffusion donnée (A2), et à un filtrage de sorte qu'il atteigne la totalité des clients (23, 26) attribués à ladite zone de radiodiffusion donnée (A2) à l'exclusion du client d'expédition (22).

13. Un système, comprenant :
une pluralité de clients (21 - 26), et
un centre de service (10) selon la revendication 12.
